# EUROPEAN PATENT APPLICATION

(11) **EP 3 505 660 A1**
(43) Date of publication of application: **03.07.2019**
(21) Application number: 18213671.3
(22) Date of filing: 18.12.2018
(51) Int. Cl.: D01D 5/16, D01D 5/34, D01F 8/14

(54) **CONJUGATED FIBER**

(30) Priority: 28.12.2017 TW 10646176
(71) Applicant: San Fang Chemical Industry Co., Ltd., Kaohsiung City (TW)
(72) Inventor: CHENG, KUO-KUANG, Kaohsiung City (TW); LIN, CHIH-YI, Kaohsiung City (TW); YANG, KAO-LUNG, Kaohsiung City (TW); KANG, PO-PING, Kaohsiung City (TW)
(74) Representative: 2K Patentanwälte Blasberg Kewitz & Reichel

(57) **Abstract**

A conjugated fiber includes a core and a sheath. The sheath covers the core, and a melting point of the sheath is lower than a melting point of the core by 60°C to 160°C.

## Description

### BACKGROUND

### 1. FIELD OF THE DISCLOSURE

The present disclosure relates to a fiber, and more particularly to a conjugated fiber.

### 2. DESCRIPTION OF THE RELATED ART

Generally, conventional artificial fibers are single-component fibers, i.e., made of a single material. As for the material of the single-component fibers, polymers with high melting point may provide the fibers with favorable strength. However, the resultant fibers may be stiff and with low elasticity, and the appearance thereof may be plastic-like and cheap. In contrast, polymers with low melting point may provide the fibers with soft handle (soft hand feeling) and favorable elasticity, but the strength and wear resistance thereof may be reduced and thus are not acceptable. In light of the above, it is necessary to provide a fiber having both the advantages of the polymers with low melting point and the polymers with high melting point.

### SUMMARY

To address at least the above concerns, the present disclosure provides for a conjugated fiber including a core and a sheath covering the core. A melting point of the sheath is lower than a melting point of the core by 60°C to 160°C.

The present disclosure further provides for a method for manufacturing a conjugated fiber, including (a) providing a core material and a sheath material, wherein a melting point of the sheath material is lower than a melting point of the core material by 60°C to 160°C; (b) melting the core material and the sheath material; and (c) extruding the core material and the sheath material through a sheath and core spinneret to jointly form a conjugated fiber, wherein the core material forms a core of the conjugated fiber, the sheath material forms a sheath of the conjugated fiber covering the core.

### BRIEF DESCRIPTION OF THE DRAWINGS

FIG. 1 illustrates a cross-sectional view of a conjugated fiber according to some embodiments of the present disclosure.
FIG. 2 illustrates a flow chart of a method for manufacturing a conjugated fiber according to some embodiments of the present disclosure.

### DETAILED DESCRIPTION

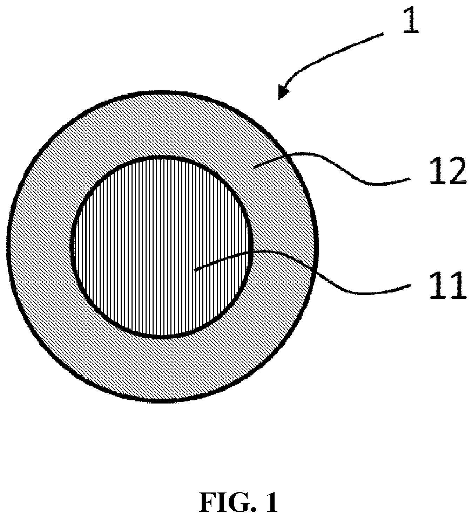

FIG. 1 illustrates a cross-sectional view of a conjugated fiber 1 according to some embodiments of the present disclosure. The conjugated fiber 1 includes a core 11 and a sheath 12. However, in other embodiments, a cross section of the conjugated fiber 1 may differ from that shown in FIG. 1. The sheath 12 covers the core 11, and a melting point of the sheath 12 is lower than a melting point of the core 11 by 60°C to 160°C. That is, the melting point of the sheath 12 is lower than the melting point of the core 11, and the difference is 60°C to 160°C.

Hereinafter in the present disclosure, the "fiber" has a length greater than a thousand times a width thereof. Preferably, the conjugated fiber 1 of the present disclosure is a filament fiber (or so-called filament), which is a fiber with a continuous length. For example, a length-to-width ratio of the filament fiber is greater than 10⁸.

For example, a fiber usually includes a crystalline region and an amorphous region. Properties of the fiber can be optimized by adjusting a ratio of the crystalline region to the amorphous region thereof. In general, with a higher percentage of the crystalline region, the fiber may be hard and stiff, with a low elasticity and a high melting point. Alternatively, with a lower percentage of the crystalline region, the fiber may be soft, with a high elasticity and a low melting point, and may usually be hot-melt adhesive. The term "hot-melt adhesive" refers to a material which can be melted by heating, and has adhesive ability under such melted state.

The "conjugated fiber 1", or so-called composite fiber or multi-component fiber, refers to a fiber which includes at least two different components. These components each has different physical or chemical properties, and can be distinguished from each other in the conjugated fiber 1. For example, there is a clear boundary between the two components.

The "core 11", i.e., core portion or core layer, refers to an inner portion of the conjugated fiber 1. The "sheath 12", i.e., sheath portion or sheath layer, refers to an outer layer of the conjugated fiber 1, which covers at least a portion of the core 11. The core 11 and the sheath 12 jointly form the conjugated fiber 1. Preferably, the sheath 12 covers the entire periphery of the core 11. The core 11 and the sheath 12 may be concentric. Alternatively, the core 11 and the sheath 12 may not be concentric, thus forming an eccentric core-sheath structure.

In some embodiments, the conjugated fiber 1 may include a single core 11 and a single sheath 12. However, in other embodiments, the conjugated fiber 1 may include a single sheath 12 covering plural cores 11, such as so-called "islands in a sea" structure. Further, the present disclosure does not exclude a multi-layered structure, such as plural sheaths 12 covering the core 11 in a layer-by-layer manner. For example, the conjugated fiber 1 may include a first sheath directly covering the core 11, and a second sheath covering the first sheath.

The shapes of the cross sections of the core 11, the sheath 12 and the conjugated fiber 1 are not limited in the present disclosure. For example, the cross section of the conjugated fiber 1 may be in a round shape, an oval shape, a triangle shape, a square shape or a cross shape. Besides, the shapes of the cross sections of the core 11 and the sheath 12 may be similar to or different from each other.

The core 11 and the sheath 12 may be formed or made of polymers, such as polymeric elastomers. Besides, the core 11 and the sheath 12 may respectively be formed of a single material, or may include two or more than two materials with different compositions and/or melting points. Preferably, the sheath 12 may be formed of a thermoplastic elastomer. The core 11 may be formed of a thermoplastic polymer or a thermosetting polymer, but is preferably formed of a thermoplastic polymer due to application and production concerns. The thermoplastic polymer includes, but is not limited to, thermoplastic polyurethane (TPU), thermoplastic polyester elastomer (TPEE), and thermoplastic polyolefin (TPO).

Hereinafter in the present disclosure, the term "thermoplastic" or "thermoplasticity" refers to a material which becomes pliable or moldable above a specific temperature and solidifies upon cooling. The term "elastomer" refers to a material having rubber-like properties, such as with viscoelasticity (i.e., both viscosity and elasticity), very weak intermolecular forces, generally low Young's modulus and high failure strain. For example, the Young's modulus of the elastomer may be as low as about 3 MPa, and can reversibly extend from 5% to 700%.

The TPU, for example, includes polyester-based TPUs, which are mainly derived from adipic acid esters; and polyether-based TPUs, which are mainly based on tetrahydrofuran ethers. The TPEE, for example, includes polyethylene terephthalate (PET) and polybutylene terephthalate (PBT). The TPO, for example, includes polyethylene (PE) and polypropylene (PP).

In the conjugated fiber 1 of the present disclosure, the melting point of the sheath 12 is lower than the melting point of the core 11 by about 60°C to about 160°C. That is, the sheath 12 has a lower melting point, while the core 11 has a higher melting point, and a difference therebetween is about 60°C to about 160°C. Preferably, the melting point of the sheath 12 is lower than the melting point of the core 11 by about 60°C to about 140°C. More preferably, the melting point of the sheath 12 is lower than the melting point of the core 11 by about 80°C to about 120°C.

Since the melting point of the sheath 12 is low, the conjugated fiber 1 may be utilized as a hot-melt yarn or thread. That is, in a fabric formed of one or more of the conjugated fiber(s) 1, since the melting point of the sheath 12 is low, the sheath 12 may be melted by heat or pressure as a hot-melt adhesive, thus forming at least one connection of the conjugated fiber(s) 1 within the fabric formed therefrom, or forming a connection with another fabric. Besides, appearance, texture, etc. of the fabric can also be optimized. On the other hand, since the melting point of the core 11 is high, structural strength, handle (hand feeling) and size of the conjugated fiber 1 can be maintained, thus the fabric formed of the conjugated fiber 1 can remain its original size and shape, and may not be too soft. When the fabric is heated or pressed, the core 11 is not melted, thus the size of the fabric may not be affected by heat or pressure, and the shape of the fabric may not be change dramatically.

Generally, melting point of a polymer is usually within a range of values rather than a single value, and the melting point may vary according to production conditions. That is, melting point of a polymer may vary between production batches. If the difference between melting points of the core 11 and the sheath 12 is less than 60°C, when the sheath 12 is melted by heat or pressure, the core 11 may also be partially melted. Alternatively, if the difference between melting points of the core 11 and the sheath 12 is greater than 160°C, production of the conjugated fiber 1 may become difficult, and bonding strength between the core 11 and the sheath 12 may be weak.

In addition, since the melting point of the core 11 is high, the conjugated fiber 1 is provided with sufficient tenacity and appropriate elongation rate. Since the melting point of the sheath 12 is low, the conjugated fiber 1 is provided with low initial modulus, thus is suitable for weaving. The conjugated fiber 1 of the present disclosure is provided with soft handle, high plasticity, favorable physical properties and improved wear resistance.

In some embodiments, the material of the core 11 is selected from the group consisting of TPU, TPEE and TPO. The melting point of the core 11 may be greater than 180°C, greater than 200°C, or greater than 220°C. For example, the melting point of the core 11 may be in the range of about 180°C to about 270°C.

For example, the core 11 may be made of TPEE with a melting point greater than about 180°C, which includes, but is not limited to, polyethylene terephthalate (PET) and polybutylene terephthalate (PBT).

Preferably, the material of the core 11 may be polybutylene terephthalate, and an intrinsic viscosity thereof may be 70 cm³/g to 110 cm³/g.

Similarly, the material of the sheath 12 may be selected from the group consisting of TPU, TPEE and TPO. The melting point of the sheath 12 may be in a range of about 60°C to about 120°C.

For example, the sheath 12 may be made of TPU with a melting point lower than 120°C, or TPEE with a melting point lower than 120°C, such as low-density polyethylene.

In the conjugated fiber 1, the materials of the core 11 and the sheath 12 may be selected from a same type of polymers but with different melting points, such as TPUs with different melting points. Alternatively, the core 11 and the sheath 12 may be made of different types of polymers. In some embodiments, core 11 and the sheath 12 made of the same type of polymers may be provided with an improved bonding strength therebetween. Besides, in some embodiments, the core 11 and the sheath 12 are both made of TPUs, hence the conjugated fiber is provided with a soft handle.

The ratio of the core 11 to the sheath 12 of the conjugated fiber 1 is not limited in the present disclosure. However, in some embodiments, the volume ratio of the core 11 to the sheath 12 is preferably in a range of 2:8 to 8:2, e.g., in a range of 3:7 to 7:3, in a range of 4:6 to 6:4, or in a range of about 5:5. By adjusting the volume ratio of the core 11 to the sheath 12, the tenacity, elasticity, hot-melt adhesive ability, and appropriate thermal-pressing temperature of the conjugated fiber 1 can be optimized. Accordingly, the conjugated fiber 1 can have a wide range of applications.

In some embodiments, a shore D hardness of the core 11 may be greater than 60 D, and a Shore A hardness of the sheath 12 may be less than 80A. Said Shore A hardness and Shore D hardness may be measured according to ASTM D2240-15. In some embodiments, the Shore D hardness of the core 11 may be 60 D to 90 D, or greater. The Shore A hardness of the sheath 12 may be 40 A to 80 A. By adjusting the hardness, the tenacity and elasticity of the conjugated fiber 1 may be further optimized.

The conjugated fiber 1 may be manufactured by co-extrusion, such as extruding the core 11 and the sheath 12 simultaneously using a sheath and core spinneret. Alternatively, the core 11 may be formed first, and then the sheath 12 may be formed on a periphery of the core 11 by coating, which is not limited in the present disclosure.

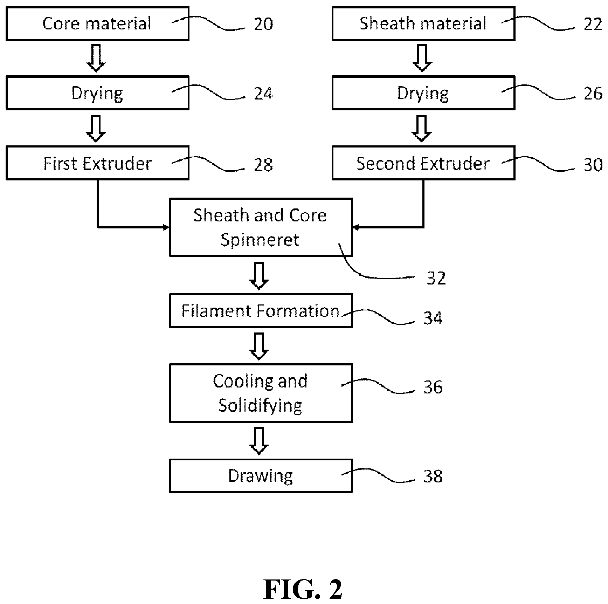

FIG. 2 illustrates a flow chart of a method for manufacturing a conjugated fiber according to some embodiments of the present disclosure, such as the aforementioned conjugated fiber 1.

Firstly, a core material (Step 20) and a sheath material (Step 22) are provided. A melting point of the sheath material is lower than a melting point of the core material by 60°C to 160°C. The core material and the sheath material may be selected referring to the materials of the core 11 and the sheath 12 of the conjugated fiber 1 described above, thus are not repeated redundantly. The core material and the sheath material can be provided in different forms accordingly to the exact material properties thereof. For example, thermoplastic polymers are usually provided in the form of pellets.

To meet the requirement of fiber formation and physical properties of the resultant conjugated fiber, the core material and the sheath material are preferably provided with low moisture content, such as lower than 300 ppm, or even lower than 100 ppm. Accordingly, before melting the core material and the sheath material, the method may further include drying the core material (Step 24) and drying the sheath material (Step 26) to lower the moisture content thereof. Generally, a drying temperature may be lower than a melting temperature of a material. For example, the core material may be dried at a temperature of about 90°C to about 120°C, preferably at a temperature about 100°C to about 120°C. The sheath material may be dried at a temperature of about 40°C to about 70°C, preferably at a temperature about 50°C to about 60°C.

Then, the core material and the sheath material are respectively melted. For example, the core material may be disposed in a first extruder (Step 28), and a series of temperature zones are set from the input to the output thereof, such that the core material can be melted by multiple stages of temperatures. Similarly, the sheath material may be melted in a second extruder (Step 30).

The melted core material and sheath material are delivered through the sheath and core spinneret (Step 32), and are extruded together for filament formation (Step 34), thus jointly form the conjugated fiber 1. At least one opening of the sheath and core spinneret corresponds to the shape of the core 11, and at least another one opening of the sheath and core spinneret corresponds to the shape of the sheath 12. Thus, the core material forms the core 11, and the sheath material forms the sheath 12 covering the core 11. The conjugated fiber 1 may be formed by multi-filament or mono-filament process based on the production requirement and the characteristics of the equipment.

After the core material and the sheath material are extruded through the sheath and core spinneret, the method may further include cooling and solidifying the conjugated fiber (Step 36). Preferably, the cooling and solidifying step is conducted by disposing the conjugated fiber 1 into a cooling bath. A temperature of the cooling bath is lower than room temperature, thus the melted sheath material and core material can be rapidly cooled and solidified.

Besides, after the conjugated fiber is cooled and solidified, the method may further include drawing the conjugated fiber 1 (Step 38). For example, the conjugated fiber 1 can be drawn with a draw ratio of about 1 to about 5 to improve tenacity thereof. In addition, the conjugated fiber 1 can be drawn more than one times.

The following examples are given for illustrating the method for manufacturing the conjugated fiber of the present disclosure, but are not intended to limit the scope of the present invention

### Example 1:

PBT pellets manufactured by SHINKONG SYNTHETIC FIBERS CORP. are provided as the core material, with an intrinsic viscosity (IV) of 87 cm³/g and a melting point of 228°C. The core material is dried under 110°C for 4 hours till the moisture content is lower than 100 ppm. TPU pellets manufacture by BASF Corporation are provided as the sheath material, with a Shore A hardness of 75 A and a melting point of 120°C. The sheath material is dried under 60°C for 5 hours till the moisture content thereof is lower than 300 ppm.

The dried core material is then delivered to a first extruder. The temperature zones of the first extruder from the input to the output is set at 215°C, 245°C, 245°C and 240°C sequentially for melting the core material. The dried sheath material is then delivered to a second extruder. The temperature zones of the second extruder from the input to the output is set at 90°C, 130°C, 125°C and 120°C sequentially for melt the core material.

Then, the melted core material and the melted sheath material are extruded through a sheath and core spinneret for filament formation, with a volume ratio of the core material and the sheath material being 8:2, thus forming the conjugated fiber. After leaving the sheath and core spinneret, the conjugated fiber enters an 18°C cooling bath, such that the conjugated fiber is cooled and solidified.

Then, the conjugated fiber may pass through first drawing rollers with a surface speed of 15 m/min. The conjugated fiber may then pass through a 70°C hot water bath, and may then pass through second drawing rollers with a surface speed of 35 m/min. The conjugated fiber is thus drawn by the speed difference between the first drawing rollers and second drawing rollers, and a draw ratio is about 2.333. Then, the conjugated fiber may pass through a 110°C oven, and may then pass through third drawing rollers with a surface speed of 80 m/min. The conjugated fiber is again drawn by the speed difference between the second drawing rollers and third drawing rollers, and a draw ratio is about 2.2. The tenacity of the conjugated fiber may thus be improved.

Then, the conjugated fiber may be wound by a winder into a bobbin. The measured physical properties of the conjugated fiber in Example 1: fineness of 300 den, tenacity of 2.6 g/den, elongation at break of 51%, and elastic recovery of 12%, as shown in Table 1 below.

### Example 2:

PBT pellets manufactured by BASF Corporation are provided as the core material, with an intrinsic viscosity of 107 cm³/g and a melting point of 226°C. The core material is dried under 110°C for 4 hours till the moisture content is lower than 100 ppm. TPU pellets manufacture by Lubrizol Corporation are provided as the sheath material, with a Shore A hardness of 64 A and a melting point of 108°C. The sheath material is dried under 50°C for 5 hours till the moisture content thereof is lower than 250 ppm.

The dried core material is then delivered to a first extruder. The temperature zones of the first extruder from the input to the output is set at 220°C, 260°C, 255°C and 250°C sequentially for melting the core material. The dried sheath material is then delivered to a second extruder. The temperature zones of the second extruder from the input to the output is set at 70°C, 120°C, 115°C and 115°C sequentially for melt the core material.

Then, the melted core material and the melted sheath material are extruded through a sheath and core spinneret for filament formation, with a volume ratio of the core material and the sheath material being 4:6, thus forming the conjugated fiber. After leaving the sheath and core spinneret, the conjugated fiber enters a 14°C cooling bath, such that the conjugated fiber is cooled and solidified.

Then, the conjugated fiber may pass through first drawing rollers with a surface speed of 18 m/min. The conjugated fiber may then pass through a 65°C hot water bath, and may then pass through second drawing rollers with a surface speed of 55 m/min. The conjugated fiber is thus drawn by the speed difference between the first drawing rollers and second drawing rollers, and a draw ratio is about 3.05. Then, the conjugated fiber may pass through a 100°C oven, and may then pass through third drawing rollers with a surface speed of 90 m/min. The conjugated fiber is again drawn by the speed difference between the second drawing rollers and third drawing rollers, and a draw ratio is about 1.63. The tenacity of the conjugated fiber may thus be improved.

Then, the conjugated fiber may be wound by a winder into a bobbin. The measured physical properties of the conjugated fiber in Example 2: fineness of 300 den, tenacity of 2.3 g/den, elongation at break of 67%, and elastic recovery of 31%, as shown in Table 1 below.

### Example 3:

TPEE pellets manufactured by TOYOBO Co., LTD. are provided as the core material, with a Shore A hardness of 98 A and a melting point of 200°C. The core material is dried under 100°C for 4 hours till the moisture content is lower than 80 ppm. TPO pellets manufacture by LCY CHEMICAL CORP. are provided as the sheath material, with a melt flow rate (MFR) of 11 g/10 min and a melting point of 95°C.

The dried core material is then delivered to a first extruder. The temperature zones of the first extruder from the input to the output is set at 185°C, 225°C, 230°C and 230°C sequentially for melting the core material. The sheath material is then delivered to a second extruder. The temperature zones of the second extruder from the input to the output is set at 60°C, 120°C, 115°C and 115°C sequentially for melt the core material.

Then, the melted core material and the melted sheath material are extruded through a sheath and core spinneret for filament formation, with a volume ratio of the core material and the sheath material being 5:5, thus forming the conjugated fiber. After leaving the sheath and core spinneret, the conjugated fiber enters a 25°C cooling bath, such that the conjugated fiber is cooled and solidified.

Then, the conjugated fiber may pass through first drawing rollers with a surface speed of 20 m/min. The conjugated fiber may then pass through an 80°C hot water bath, and may then pass through second drawing rollers with a surface speed of 65 m/min. The conjugated fiber is thus drawn by the speed difference between the first drawing rollers and second drawing rollers, and a draw ratio is about 3.25. Then, the conjugated fiber may pass through a 100°C oven, and may then pass through third drawing rollers with a surface speed of 75 m/min. The conjugated fiber is again drawn by the speed difference between the second drawing rollers and third drawing rollers, and a draw ratio is about 1.15. The tenacity of the conjugated fiber may thus be improved.

Then, the conjugated fiber may be wound by a winder into a bobbin. The measured physical properties of the conjugated fiber in Example 3: fineness of 300 den, tenacity of 2.4 g/den, elongation at break of 77%, and elastic recovery of 28%, as shown in Table 1 below.

### Comparative Example 1:

PBT pellets manufactured by SHINKONG SYNTHETIC FIBERS CORP. are provided as the fiber material, with an intrinsic viscosity of 64 cm³/g. The fiber material is dried at 120°C for 4 hours till the moisture content is lower than 100 ppm.

The dried fiber material is then delivered to an extruder. The temperature zones of the first extruder from the input to the output is set at 240°C, 250°C, 260°C and 270°C sequentially for melting the fiber material. Then, the melted fiber material is extruded and then enters a 20°C cooling bath, such that the resultant fiber is cooled and solidified. Then, the fiber may pass through first drawing rollers with a surface speed of 20 m/min. The fiber may then pass through a 90°C hot water bath, and may then pass through second drawing rollers with a surface speed of 65 m/min. The fiber is thus drawn by the speed difference between the first drawing rollers and second drawing rollers, and a draw ratio is about 3.25. Then, the fiber may pass through a 120°C oven, and may then pass through third drawing rollers with a surface speed of 100 m/min. The fiber is again drawn by the speed difference between the second drawing rollers and third drawing rollers, and a draw ratio is about 1.5. The tenacity of the fiber may thus be improved.

Then, the fiber may be wound by a winder into a bobbin. The measured physical properties of the fiber in Comparative Example 1: fineness of 300 den, tenacity of 4.3 g/den, elongation at break of 28%, and elastic recovery of 2.5%, as shown in Table 1 below.

### Comparative Example 2:

PBT pellets manufactured by SHINKONG SYNTHETIC FIBERS CORP. are provided as the fiber material, with an intrinsic viscosity of 87 cm³/g. The fiber material is dried at 110°C for 4 hours till the moisture content is lower than 100 ppm.

The dried fiber material is then delivered to an extruder. The temperature zones of the first extruder from the input to the output is set at 230°C, 240°C, 250°C and 260°C sequentially for melting the fiber material. Then, the melted fiber material is extruded and then enters a 20°C cooling bath, such that the resultant fiber is cooled and solidified. Then, the fiber may pass through first drawing rollers with a surface speed of 18 m/min. The fiber may then pass through a 90°C hot water bath, and may then pass through second drawing rollers with a surface speed of 64 m/min. The fiber is thus drawn by the speed difference between the first drawing rollers and second drawing rollers, and a draw ratio is about 3.5. Then, the fiber may pass through a 100°C oven, and may then pass through third drawing rollers with a surface speed of 90 m/min. The fiber is again drawn by the speed difference between the second drawing rollers and third drawing rollers, and a draw ratio is about 1.4. The tenacity of the fiber may thus be improved.

Then, the fiber may be wound by a winder into a bobbin. The measured physical properties of the fiber in Comparative Example 2: fineness of 300 den, tenacity of 3.1 g/den, elongation at break of 43%, and elastic recovery of 4.7%, as shown in Table 1 below.

### Comparative Example 3:

TPU pellets manufactured by BASF Corporation are provided as the fiber material, with a Shore A of 75A and a melting point of 120°C. The fiber material is dried at 60°C for 5 hours till the moisture content is lower than 300 ppm.

The dried fiber material is then delivered to an extruder. The temperature zones of the first extruder from the input to the output is set at 60°C, 120°C, 115°C and 115°C sequentially for melting the fiber material. Then, the melted fiber material is extruded and then enters a 10°C cooling bath, such that the resultant fiber is cooled and solidified. Then, the fiber may pass through first drawing rollers with a surface speed of 18 m/min. The fiber may then pass through a 35°C hot water bath, and may then pass through second drawing rollers with a surface speed of 40 m/min. The fiber is thus drawn by the speed difference between the first drawing rollers and second drawing rollers, and a draw ratio is about 2.2. Then, the fiber may pass through a 50°C oven, and may then pass through third drawing rollers with a surface speed of 64 m/min. The fiber is again drawn by the speed difference between the second drawing rollers and third drawing rollers, and a draw ratio is about 1.6. The tenacity of the fiber may thus be improved.

Then, the fiber may be wound by a winder into a bobbin. The measured physical properties of the fiber in Comparative Example 3: fineness of 300 den, tenacity of 1.2 g/den, elongation at break of 260%, and elastic recovery of 88%, as shown in Table 1 below.

### Comparative Example 4:

TPEE pellets manufactured by TOYOBO Co., LTD. are provided as the fiber material, with a Shore A of 98A and a melting point of 210°C. The fiber material is then delivered to an extruder. The temperature zones of the first extruder from the input to the output is set at 240°C, 250°C, 255°C and 260°C sequentially for melting the fiber material. Then, the melted fiber material is extruded and then enters a 25°C cooling bath, such that the resultant fiber is cooled and solidified. Then, the fiber may pass through first drawing rollers with a surface speed of 20 m/min. The fiber may then pass through a 40°C hot water bath, and may then pass through second drawing rollers with a surface speed of 40 m/min. The fiber is thus drawn by the speed difference between the first drawing rollers and second drawing rollers, and a draw ratio is about 2. Then, the fiber may pass through a 50°C oven, and may then pass through third drawing rollers with a surface speed of 48 m/min. The fiber is again drawn by the speed difference between the second drawing rollers and third drawing rollers, and a draw ratio is about 1.2. The tenacity of the fiber may thus be improved.

Then, the fiber may be wound by a winder into a bobbin. The measured physical properties of the fiber in Comparative Example 4: fineness of 300 den, tenacity of 1.3 g/den, elongation at break of 160%, and elastic recovery of 65%, as shown in Table 1 below.

### Comparative Example 5:

TPO pellets manufactured by Vistamaxx are provided as the fiber material, with a Shore A of 27A and a melting point of 60°C. The fiber material is then delivered to an extruder. The temperature zones of the first extruder from the input to the output is set at 90°C, 120°C, 160°C and 160°C sequentially for melting the fiber material. Then, the melted fiber material is extruded and then enters a 14°C cooling bath, such that the resultant fiber is cooled and solidified. Then, the fiber may pass through first drawing rollers with a surface speed of 20 m/min. The fiber may then pass through a 40°C hot water bath, and may then pass through second drawing rollers with a surface speed of 60 m/min. The fiber is thus drawn by the speed difference between the first drawing rollers and second drawing rollers, and a draw ratio is about 3. Then, the fiber may pass through a 50°C oven, and may then pass through third drawing rollers with a surface speed of 82 m/min. The fiber is again drawn by the speed difference between the second drawing rollers and third drawing rollers, and a draw ratio is about 1.36. The tenacity of the fiber may thus be improved.

Then, the fiber may be wound by a winder into a bobbin. The measured physical properties of the fiber in Comparative Example 5: fineness of 300 den, tenacity of 2.0 g/den, elongation at break of 244%, and elastic recovery of 43%, as shown in Table 1 below.

**Table 1: compositions and physical properties of Examples 1 to 3 and Comparative Examples 1 to 5**

| | PET(%) | PBT(%) | TPU(%) | TPEE(%) | TPO(%) | Fineness (denier) | Tenacity (g/den) | Elongation at Break (%) | Elastic Recovery (%) |
|---|---|---|---|---|---|---|---|---|---|
| Example 1 | - | 80 | 20 | - | - | 300 | 2.6 | 51 | 12 |
| Example 2 | - | 40 | 60 | - | - | 300 | 2.3 | 67 | 31 |
| Example 3 | - | - | - | 50 | 50 | 300 | 2.4 | 77 | 28 |
| Comparative Example 1 | 100 | - | - | - | - | 300 | 4.3 | 28 | 1.5 |
| Comparative Example 2 | - | 100 | - | - | - | 300 | 3.1 | 43 | 4.7 |
| Comparative Example 3 | - | - | 100 | - | - | 300 | 1.2 | 260 | 88 |
| Comparative Example 4 | - | - | - | 100 | - | 300 | 1.3 | 160 | 65 |
| Comparative Example 5 | - | - | - | - | 100 | 300 | 2.0 | 244 | 43 |

Referring to Table 1 above, in comparison to Example 1, Comparative Example 2 has higher tenacity but lower elongation at break and lower elastic recovery. In contrast, Example 1 (volume ratio of PBT and TPU being 8:2) has a 16.1% lowered tenacity, but the elongation at break and elastic recovery thereof are increased for 18.6% and 155.3%, respectively. That is, the tenacity of the conjugated fiber is slightly lowered, but elastic recovery thereof is dramatically increased. Hence, the conjugated fiber is suitable for a wide range of applications

In comparison to Comparative Example 2, Example 2 (volume ratio of PBT and TPU being 4:6) has much lower tenacity, but the elongation at break and elastic recovery thereof are increased for 55.8% and 559.5%, respectively. Besides, the TPU used in the Example 2 has a Shore A hardness of 64A, which makes the resultant conjugated fiber soft and with hot-melt adhesive ability, thus having a wide range of applications.

While the present disclosure has been described and illustrated with reference to specific embodiments thereof, these descriptions and illustrations are not limiting. It should be understood by those skilled in the art that various changes may be made and equivalents may be substituted without departing from the true spirit and scope of the present disclosure as defined by the appended claims. The illustrations may not be necessarily drawn to scale. There may be distinctions between the artistic renditions in the present disclosure and the actual apparatus due to manufacturing processes and tolerances. There may be other embodiments of the present disclosure which are not specifically illustrated. The specification and drawings are to be regarded as illustrative rather than restrictive. Modifications may be made to adapt a particular situation, material, composition of matter, method, or process to the objective, spirit and scope of the present disclosure. All such modifications are intended to be within the scope of the claims appended hereto. While the methods disclosed herein have been described with reference to particular operations performed in a particular order, it will be understood that these operations may be combined, sub-divided, or re-ordered to form an equivalent method without departing from the teachings of the present disclosure. Accordingly, unless specifically indicated herein, the order and grouping of the operations are not limitations of the present disclosure.

## Claims

1. A conjugated fiber, comprising:
a core; and
a sheath covering the core, wherein a melting point of the sheath is lower than a melting point of the core by 60°C to 160°C.

2. The conjugated fiber of claim 1, wherein a material of the core is selected from a group consisting of thermoplastic polyurethane, thermoplastic polyester elastomer and thermoplastic polyolefin, and the melting point of the core is higher than 180°C.

3. The conjugated fiber of claim 1 or 2, wherein a material of the sheath is selected from a group consisting of thermoplastic polyurethane, thermoplastic polyester elastomer and thermoplastic polyolefin, and the melting point of the core is lower than 120°C.

4. The conjugated fiber of one of the preceding claims, wherein a volume ratio of the core to the sheath is in a range of 2:8 to 8:2.

5. The conjugated fiber of one of the preceding claims, wherein a Shore D hardness of the core is greater than 60D, and a Shore A hardness of the sheath is less than 80A.

6. The conjugated fiber of one of the preceding claims, wherein a material of the core includes polybutylene terephthalate (PBT), and an intrinsic viscosity thereof is in a range of 70 cm³/g to 110 cm³/g.

7. A method for manufacturing a conjugated fiber, comprising:
(a) providing a core material and a sheath material, wherein a melting point of the sheath material is lower than a melting point of the core material by 60°C to 160°C;
(b) melting the core material and the sheath material; and
(c) extruding the core material and the sheath material through a sheath and core spinneret to jointly form a conjugated fiber, wherein the core material forms a core of the conjugated fiber, the sheath material forms a sheath of the conjugated fiber covering the core.

8. The method of claim 7, wherein before step (b), the method further comprises:
drying the core material and the sheath material.

9. The method of claim 7 or 8, wherein after step (c), the method further comprises:
(d) cooling and solidifying the conjugated fiber.

10. The method of claim 9, wherein after step (d), the method further comprises:
(e) drawing the conjugated fiber.
